# EUROPÄISCHE PATENTSCHRIFT

(11) **EP 2 545 193 B1**
(45) Veröffentlichungstag und Bekanntmachung des Hinweises auf die Patenterteilung: **01.06.2016**
(21) Anmeldenummer: 11718252.7
(22) Anmeldetag: 18.02.2011
(51) Int. Cl.: C22B 7/02, C22B 30/04

(54) **VERFAHREN UND VORRICHTUNG ZUR AUFBEREITUNG VON FLUGSTAUB**
METHOD AND DEVICE FOR PROCESSING FLUE DUST
PROCÉDÉ ET DISPOSITIF DE TRAITEMENT DE CENDRES VOLANTES

(30) Priorität: 10.03.2010 DE 102010011242
(43) Veröffentlichungstag der Anmeldung: 16.01.2013
(60) Teilanmeldung: 16000841.3
(73) Patentinhaber: Aurubis AG, 20539 Hamburg (DE)
(72) Erfinder: SPECHT, Andreas, 21224 Rosengarten (DE); KADEREIT, Harald, 21614 Buxtehude (DE); SCHMIDL, Jürgen, 21073 Hamburg (DE); HOPPE, Michael, 52078 Aachen (DE)
(74) Vertreter: Patentanwälte Klickow & Partner Partnerschaftsgesellschaft mbB
(86) Internationale Anmeldenummer: PCT/DE2011/000164
(87) Internationale Veröffentlichungsnummer: WO 2011/110148

(56) Entgegenhaltungen:
- WO-A1-2006/119861
- WO-A1-2008/149683
- JP-A- 2008 169 477
- SU-A1- 773 111
- US-A- 4 808 221
- US-A- 5 234 669
- US-A1- 2006 130 611
- SHEN, R. ET AL: "A feasibilty study of recycling of manganese furnace dust", INFACON XI PROCEEDINGS, 18. Februar 2007 (2007-02-18), - 21. Februar 2007 (2007-02-21), Seiten 507-519, XP002640256,

## Beschreibung

Die Erfindung betrifft ein Verfahren zur Aufbereitung von bei der Verhüttung von Kupfererzen entstehenden Flugstäube, be i dem die Flugstäube nach einer Zugabe von Schwefel und/oder mindestens einer Schwefelverbindung erhitzt und flüchtige Bestandteile abgeschieden werden und bei dem das Erhitzen der Flugstäube in einer inerten Atmosphäre durchgeführt wird und die Behandlung der Flugstäube als kontinuierlicher Prozess durchgeführt wird, wobei eine pryrometallurgische Behandlung der Flugstäube erfolgt und bei dem eine Abgasbehandlung zur Abscheidung von flüchtigen Bestandteilen, nämlich Arsen-Schwefelverbindungen erfolgt.

Bei der Verhüttung von Kupfererzen werden typischerweise Konzentrate in Form von sulfidischen Flotationsprodukten als Ausgangsstoff verwendet. Diese Flotationsprodukte enthalten etwa zu einem Drittel Kupfer, zu einem weiteren Drittel Eisen und zu einem letzten Drittel Schwefel. In geringen Konzentrationen sind darüber hinaus eine Vielzahl weiterer chemischer Elemente enthalten, beispielsweise Arsen, Wismut, Cadmium und Blei. Diese Nebenelemente verteilen sich nach deren chemischen Gleichgewichten bei den vorhandenen Prozessbedingungen auf die Stein-, Schlacken- und Abgasphase. Die Abgasphase enthält Gas und Flugstaub.

In einem ersten Verarbeitungsschritt wird aus dem Kupferkonzentrat ein Teil des Eisens durch selektive Oxidation abgetrennt. Bei einer Temperatur von etwa 1200°C wird das oxidierte Eisen durch Zugabe von Sand in einer flüssigen Schlackenphase gebunden. Aufgrund dieser hohen Temperaturen wird ein Teil der flüchtigen chemischen Verbindungen mit dem Abgas ausgetragen. Aus Gründen des Umweltschutzes und zur Energierückgewinnung erfolgt die Abgasbehand lung in einem Abhitzekessel und einer elektrischen Gasreinigung. Die durch Rekondensation gebildeten Partikel sowie mitgerissene Partikel bilden den sogenannten Flugstaub. Darin liegen die flüchtigen Elemente in einer höheren Konzentration als im Ausgangsprodukt der Konzentratmischung vor.

In der SU 773 111 A1 wird ein zweistufiges Verfahren zur Staubreinigung beschrieben.

Aus der Veröffentlichung "Shen et al. , A feasibility study of recycling of manganese furnace dust" ist ebenfalls ein Verfahren zur Behandlung von Flugstäuben bekannt. Die Flugstäube werden erhitzt.

In der US 2006/130611 A1 wird eine Staubreinigung unter Zugabe von Wasser beschrieben.

Aus der JP 2008169477 A ist eine Staubreinigung in einem zweistufigen Verfahren mit Röstung und Laugung bekannt.

Aus der Veröffentlichung Parra, R. und Parada, R: "Minor element control by flue dust treatment in cooper smelting", Global Symposium on Recycling, Waste Treatment and Clean Technology, October 12-15, 2008, Cancun Mexico ist es bereits bekannt, Flugstäube aus der Kupferproduktion zu behandeln. Den Stäuben wird hierbei Schwefel bzw. Kupfersulfid beigemischt. Die Verfahrensdurchführung erfolgt als pyrometallurgischer Prozess.

Da in Flugstäuben erhebliche Mengen an Kupfer enthalten sind, wird angestrebt, die Flugstäube erneut dem Verhüttungsprozess zuzuführen. Da hierbei auch eine Rückführung der flüchtigen Elemente erfolgt, kommt es ohne geeignete Gegenmaßnahmen zu einer Anreicherung der Nebenelemente im Prozess.

Eine Aufbereitung von Flugstäuben wird bereits in der US 5 234 669 beschrieben. Eine Anreicherung unerwünschter chemischer Elemente im Prozess kann gemäß dem in dieser Veröffentlichung beschriebenen Verfahren aber nicht verhindert werden.

Aufgabe der vorliegenden Erfindung ist es daher, ein Verfahren der einleitend genannten Art derart zu verbessern, dass der Anteil unerwünschter flüchtiger Verbindungen in Flugstäuben effektiver vermindert wird.

Diese Aufgabe wird erfindungsgemäß dadurch gelöst, dass die Aufbereitung der Flugstäube im Wirbelschichtverfahren erfolgt.

Es ist auch zu bemerken, dass den Flugstäuben Schwefel oder Schwefelhaltige Verbindungen (z.B. Kupfererzkonzentrat) hinzugefügt werden und dass das Erhitzen in einer inerten Atmosphäre durchgeführt wird, und dass die Behandlung der Flugstäube als kontinuierlicher Prozess durchgeführt wird.

Weitere wird eine Vorrichtung der einleitend genannten Art verwendet dass der Anteil flüchtiger Bestandteile in Flugstäuben effektiver vermindert wird.

Die Einrichtung zur thermischen Behandlung ist mit einer Versorgungseinrichtung zur Bereitstellung einer inerten Atmosphäre gekoppelt, dass ein kontinuierlicher Betrieb realisiert ist, dass eine pryrometallurgische Behandlung der Flugstäube erfolgt und dass eine Abgasbehand lung zur Abscheidung von f lücht igen Bestandteilen erfolgt.

Es ist auch zu bemerken, dass den Flugstäuben Schwefel oder Schwefelhaltige Verbindungen (z.B. Kupfererzkonzentrat) hinzugefügt werden und dass das Erhitzen in einer inerten Atmosphäre durchgeführt wird, und dass die Behandlung der Flugstäube als kontinuierlicher Prozess durchgeführt wird.

Unter Verwendung des erfindungsgemäßen Verfahrens ist es möglich, unerwünschte chemische Elemente aus den Flugstäuben zu entfernen bzw. deren Anteil zumindest erheblich zu reduzieren. Erfindungsgemäß wird das Entstehen von SO2-haltigen Abgasen vermieden bzw. zumindest wesentlich reduziert. Die Abgase müssen deshalb nicht gesondert wie die hoch-SO2-haltigen Hüttenabgase behandelt werden, um beispielsweise eine Verflüssigung des SO2 oder eine Umwandlung in Schwefelsäure vorzunehmen.

Erfindungsgemäß entstehen geringere Abgasmengen als bei herkömmlichen Verfahren und Vorrichtungen. Durch die Verwendung der inerten Atmosphäre fällt der Schwefel nicht in Form von SO2 sondern elementar oder in sulfidischen Verbindungen an. Durch die Vermeidung einer Abgasbehandlung, beispielsweise in Form einer Doppel-/Kontaktanlage zur Schwefelsäuregewinnung, können die erforderlichen Investitionskosten deutlich vermindert werden. Weitere Vorteile liegen in einer Durchsatzsteigerung im Prozess der Kupferherstellung und in der Unterstützung einer Verwendung von komlexeren Erzkonzentraten, da durch die erfindungsgemäße Behandlung der Flugstäube eine Anreicherung im Prozess verhindert bzw. deutlich reduziert wird.

Die vorliegende Erfindung bietet die Möglichkeit, verschiedene Elemente, die die Qualität der Produkte bei der Kupferherstellung negativ beeinflussen, zu separieren und in einem Feststoff anzureichern.

Ein typischer Prozeßablauf erfolgt derart, dass Arsen oder eine Arsen-Schwefelverbindung als flüchtiger Bestandteil mit dem Abgas ausgetragen und in der nachgeschalteten Abgasreinigung als Feststoff oder im Waschwasser abgeschieden wird.

Eine einfache Prozeßdurchführung wird dadurch unterstützt, dass die Behandlung der Flugstäube als kontinuierlicher Prozess durchgeführt werden kann.

Gemäß einer anderen Prozeßvariante ist aber auch daran gedacht, dass die Behandlung der Flugstäube als diskontinuierlicher Prozess durchgeführt wird.

Eine einfache Prozeßdurchführung wird ebenfalls dadurch erreicht, dass die Behandlung der Flugstäube bei Umgebungsdruck durchgeführt wird.

Die Entfernung der flüchtigen Bestandteile wird dadurch unterstützt, dass die Behandlung der Flugstäube bei Unterdruck durchgeführt wird, beispielsweise bei 200 mbar bis 400 mbar.

Eine Beschleunigung der thermischen Prozesse bei der Behandlung der Flugstäube während der thermischen Behandlung kann dadurch erfolgen, dass die Behandlung der Flugstäube bei Überdruck durchgeführt wird.

Ein typischer Prozeßbereich wird dadurch definiert, dass die Temperatur während der Erhitzung der Flugstäube mindestens zeitweilig im Bereich von 500°C bis 1.000°C liegt. Bevorzugt ist ein Bereich von 650°C bis 950°C.

Gemäß einer bevorzugten Ausführungsform ist angestrebt, dass ein Anteil von Schwefeldioxid im Abgas im Mittel höchstens 5 Volumenprozent beträgt. Bevorzugt im Mittel höchstens 2%.

In den Zeichnungen sind folgende Beispiele schematisch dargestellt. Es zeigen:
- Fig. 1: ein Anlagenkonzept zur pyrometallurgischen Behandlung von Flugstäuben im Drehrohrofen mit zweistufiger Abgasbehandlung, (nicht erfindungsgemäß),
- Fig. 2: ein verfahrenskonzept zur pyrometallurgischen Behandlung von Flugstäuben im Wirbelschichtverfahren mit einstufiger Abgasbehandlung,

- Fig. 3: ein Schema zur Flugstaubabführung und
- Fig. 4: eine Schwefelbilanz zur Gegenüberstellung des Standes der Technik sowie des erfindungsgemäßen Verfahrens.

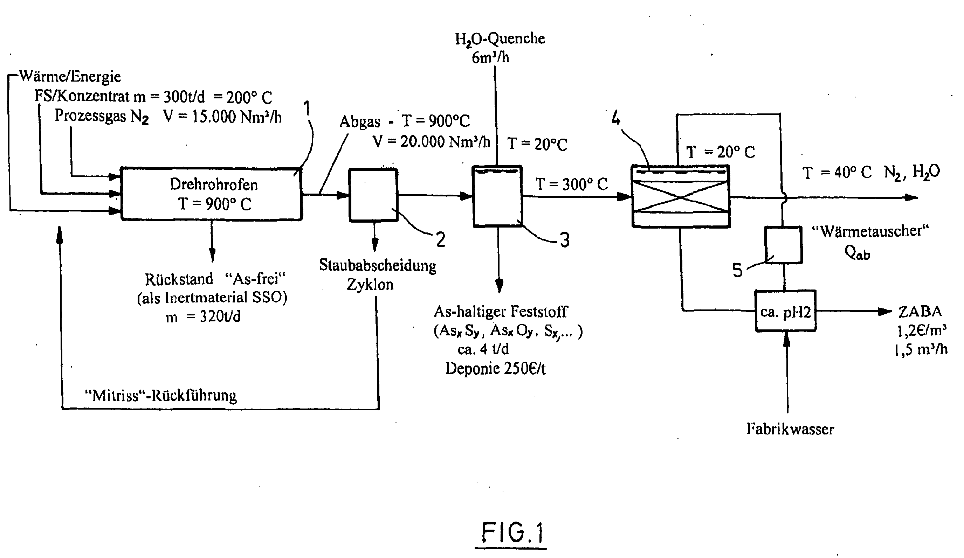

Figur 1 zeigt die Verwendung eines Drehrohrofens (1), der eine Behandlung des zugeführten Materials bei einer Temperatur von etwa 900°C durchführt. Die zugeführten Stoffe sind hierbei zum einen Kupferkonzentrat und zum anderen abgeschiedene Flugstäube. Die Staubabscheidung erfolgt im Bereich eines Zyklons (2).

Die Behandlung im Drehrohrofen (1) erfolgt in einer inerten Atmosphäre. Typischerweise wird hierzu Stickstoff verwendet. Bei einer Zufuhr der Konzenzrat-Flugstaub-Mischung mit einem Massenstrom von 300 t pro Tag beträgt eine typische Menge der Zufuhr an Stickstoff 15.000 Nm³ pro Stunde. Die dem Zyklon (2) zugeführte Abgasmenge beträgt bei einem derartigen Durchsatz typischerweise 20.000 Nm³ pro Stunde bei einer Abgastemperatur von etwa 900°C. (Nm³ = Norm-Kubikmeter)

Alternativ zur Verwendung von Stickstoff als Inertgas können auch andere Gase verwendet werden. Beispielsweise ist an die Verwendung von Argon gedacht. Die Rösttemperatur von 900°C stellt lediglich eine bevorzugte Temperatur dar. Typischerweise ist eine Temperatur im Intervall von 650°C bis 950°C realisierbar. Dem Drehrohrofen (1) werden die Flugstäube und das frische Konzentrat in einem Mischungsverhältnis von Konzentrat/Flugstäuben typischerweise im Intervall von 1:3 bis 1:1 zugeführt. Die Verweilzeit der Mischung im Drehrohrofen (1) beträgt typischerweise 1 bis 4 Stunden.

Im Anschluss an den Zyklon (2) ist ein Abscheider (3) angeordnet, in dem ein arsenhaltiger Feststoff anfällt. Abgase des Abscheiders (3) werden einem Sekundärabscheider (4) zugeführt. Der Sekundärabscheider (4) ist zur Energierückgewinnung mit einem Wärmetauscher (5) versehen, um die Temperatur des finalen Abgases auf etwa 40°C zu reduzieren, um die betreffende Energie zu nutzen.

Sämtliche in Figur 1 eingetragenen Werte der Prozeßparameter sind lediglich beispielhaft und können in erheblichen Breiten variiert werden. Es erfolgt hierbei eine Anpassung an die konkreten Anwendungsanforderungen, die Durchsatzmengen sowie die Beschaffenheit der Ausgangsprodukte.

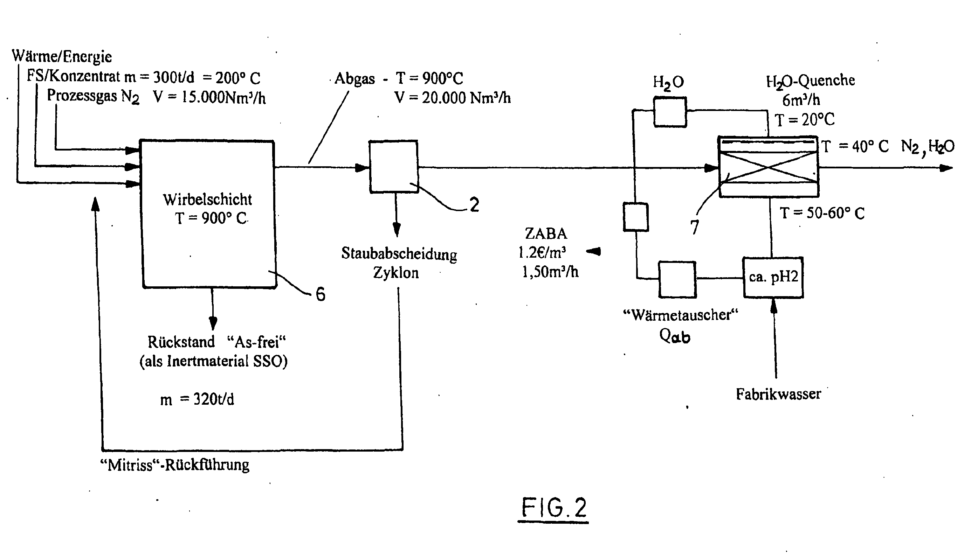

Figur 2 zeigt eine Abwandlung vom Konzept gemäß Figur 1. Statt des Drehrohrofens (1) wird hier eine wirbelschichtanlage (6) verwendet. Der Abscheider (3) und der Sekundärabscheider (4) sind hierbei zu einem einstufigen Abscheider (7) zusammengefaßt. Unter Verwendung des Wärmetauschers (5) kann auch bei diesem Konzept eine geeignete Reduktion der Temperatur des finalen Abgases erfolgen.

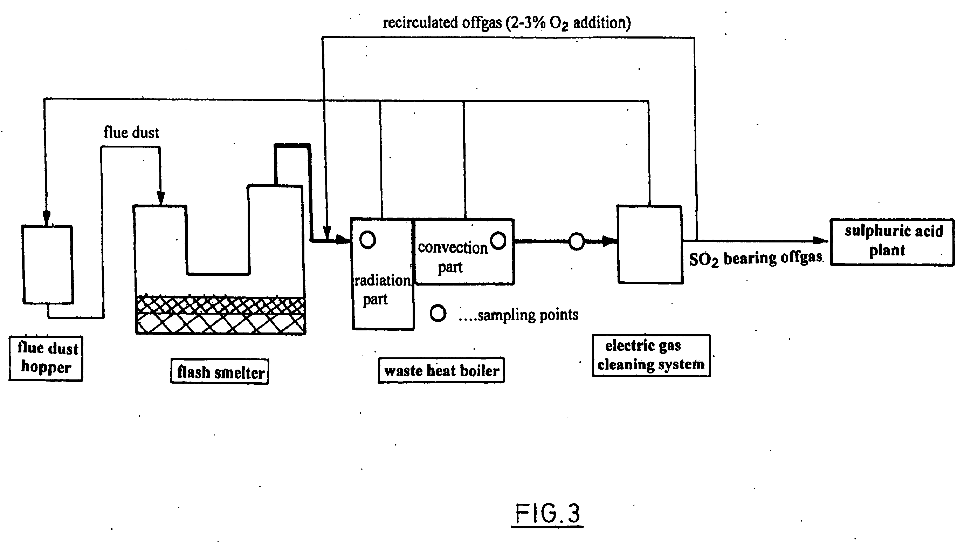

Figur 3 veranschaulicht generell die Handhabung und Abführung des Flugstaubes bei der Kupferproduktion.

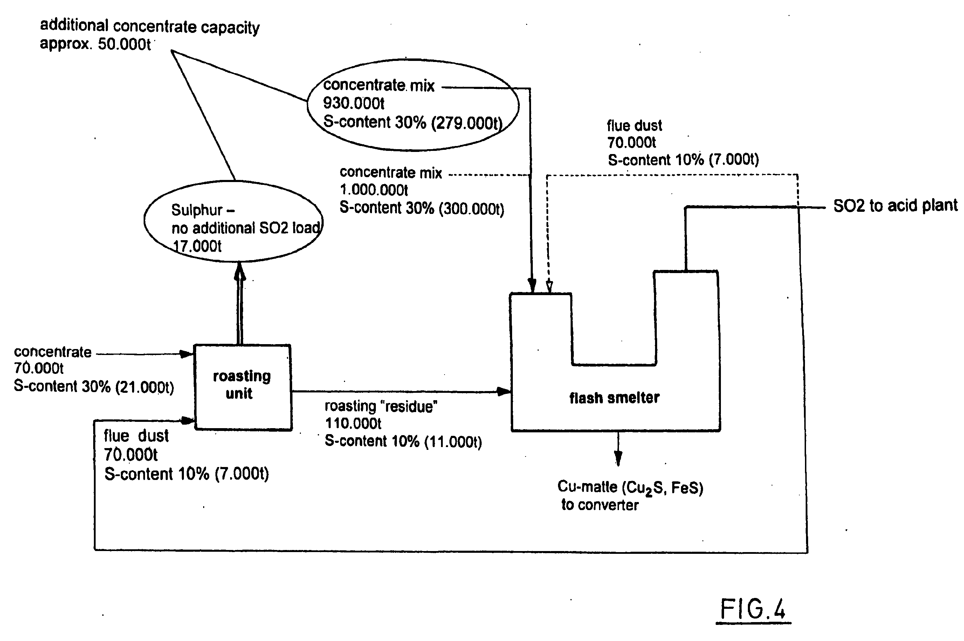

Figur 4 veranschaulicht eine Schwefelbilanz bei einer Gegenüberstellung des Standes der Technik und des erfindungsgemäßen Verfahrenskonzeptes bei einem ausgewählten Durchsatzbeispiel.

Die erfindungsgemäße Abscheidung sowie Behandlung der Flugstäube erfolgt als kontinuierlicher Prozess. Ebenfalls erfolgt eine bevorzugte Prozeßdurchführung bei Umgebungsdruck. Anwendbar sind aber auch Prozeßdurchführungen bei Unterdruck oder bei Überdruck in Abhängigkeit von den konkreten Anwendungsanforderungen.

Die erfindungsgemäße Behandlung der Flugstäube in einer inerten Atmosphäre berücksichtigt insbesondere, dass Arsen oder andere zu entfernende Substanzen im Flugstaub typischerweise in einer anderen Form als im zu Grunde liegenden Konzentrat vorliegen. Typisch sind bei einem Vergleich der entsprechenden Anteile in den Flugstäuben und im Konzentrat andere Verteilungskoeffizienten sowie andere chemische Bindungen. Beispielsweise kann das Arsen im Konzentrat als Enargit, Tennantit, Arsenopyrit oder Arsensulfid vorliegen, in Flugstäuben liegt das Arsen typischerweise als Arsenoxid, Arsensulfid, Eisen- oder Kupferarsenat vor.

Die inerte Atmosphäre beim Vorgang des Röstens ermöglicht eine deutliche Absenkung des SO2-Gehaltes im Abgas. Angestrebt ist hierbei ein entsprechender Anteil unterhalb von 5%, bevorzugt unterhalb von 2%, jeweils als Volumenanteil. Optional ist aber auch daran gedacht, doch eine Oxidierung des Abgases bzw. von Anteilen des Abgases durchzuführen.

## Patentansprüche

1. Verfahren zur Aufbereitung von bei der Verhüttung von Kupfererzen entstehenden Flugstäuben, bei dem die Flugstäube nach einer Zugabe von Schwefel und/oder mindestens einer Schwefelverbindung erhitzt und flüchtige Bestandteile abgeschieden werden und bei dem das Erhitzen der Flugstäube in einer inerten Atmosphäre durchgeführt wird und die Behandlung der Flugstäube als kontinuierlicher Prozess durchgeführt wird, wobei eine pryrometallurgische Behandlung der Flugstäube erfolgt und bei dem eine Abgasbehandlung zur Abscheidung von f lücht igen Bestandteilen, näml ich Arsen-Schwefelverbindungen erfolgt, **dadurch gekennzeichnet, dass** die Aufbereitung der Flugstäube im Wirbelschichtverfahren erfolgt.

2. Verfahren nach Anspruch 1, **dadurch gekennzeichnet, dass** Arsen elementar oder in Form von Arsen-Schwefelverbindungen verf lücht igt und anschließend abgesch ieden wird.

3. Verfahren nach einem der Ansprüche 1 oder 2, **dadurch gekennzeichnet, dass** die Behandlung der Flugstäube bei Umgebungsdruck durchgeführt wird.

4. Verfahren nach einem der Ansprüche 1 oder 2, **dadurch gekennzeichnet, dass** die Behandlung der Flugstäube bei Unterdruck durchgeführt wird.

5. Verfahren nach einem der Ansprüche 1 oder 2, **dadurch gekennzeichnet, dass** die Behandlung der Flugstäube bei Überdruck durchgeführt wird.

6. Verfahren nach einem der Ansprüche 1 bis 5, **dadurch gekennzeichnet, dass** ein Anteil von Schwefeldioxid im Abgas im Mittel höchstens 5 Volumenprozent beträgt.

## Claims

1. A method for processing flue dusts produced in the smelting of copper ores, in which the flue dusts are heated after the addition of sulfur and/or at least a sulfur compound and volatile components are separated and in which the heating of the flue dusts is carried out in an inert atmosphere and the treatment of the flue dusts is carried out as a continuous process, wherein a pyrometallurgical treatment of the flue dusts takes place and in which an exhaust gas treatment for separating volatile components, namely arsenic-sulfur compounds, takes place, **characterised in that** the processing of the flue dusts takes place in the fluidised bed process.

2. A method according to Claim 1, **characterised in that** arsenic is volatilised in elemental form or in the form of arsenic-sulfur compounds and then separated.

3. A method according to one of Claims 1 or 2, **characterised in that** the treatment of the flue dusts is carried out at atmospheric pressure.

4. A method according to one of Claims 1 or 2, **characterised in that** the treatment of the flue dusts is carried out at underpressure.

5. A method according to one of Claims 1 or 2, **characterised in that** the treatment of the flue dusts is carried out at overpressure.

6. A method according to one of Claims 1 to 5, **characterised in that** a sulfur dioxide content in the exhaust gas is on average a maximum of 5 percent by volume.

## Revendications

1. Procédé pour le traitement de cendres volantes provenant de la fonte de minerai de cuivre, dans lequel les cendres volantes sont chauffées après une adduction de soufre et / ou au moins d'un composé de soufre et les composants volatiles sont séparés, et dans lequel le chauffage des cendres volantes est effectué dans une atmosphère inerte et le traitement des cendres volantes est effectué en tant que processus continu, sachant qu'un traitement pyrometallurgique des cendres volantes est exécuté et dans lequel un traitement des gaz d'échappement a lieu pour la séparation de composants volatiles, en particulier de composés d'arsenic et de soufre,
**caractérisé en ce que** le traitement des cendres volantes est effectué selon le procédé de craquage.

2. Procédé selon la revendication 1,
**caractérisé en ce que** l'arsenic élémentaire ou sous la forme d'un composé d'arsenic et de soufre se volatilise et est ensuite séparé.

3. Procédé selon l'une des revendications 1 ou 2,
**caractérisé en ce que** le traitement des cendres volantes poussières est effectué sous pression ambiante.

4. Procédé selon l'une des revendications 1 ou 2,
**caractérisé en ce que** le traitement des cendres volantes poussières est effectué sous pression négative.

5. Procédé selon l'une des revendications 1 ou 2,
**caractérisé en ce que** le traitement des cendres volantes poussières est effectué sous surpression.

6. Procédé selon l'une des revendications 1 à 5,
**caractérisé en ce que** la part de dioxyde de souffre dans les gaz d'échappement est en moyenne de 5 pourcent en volume.
